# EUROPEAN PATENT APPLICATION

(11) **EP 2 620 684 A1**
(43) Date of publication of application: **31.07.2013**
(21) Application number: 12000427.0
(22) Date of filing: 24.01.2012
(51) Int. Cl.: F16L 19/065

(54) **Device for coupling tubes and accessories such as plugs, extensions and spigots**

(71) Applicant: Francisco Testa, Horacio, Santa Fe (AR)
(72) Inventor: Francisco Testa, Horacio, Santa Fe (AR)
(74) Representative: Mediano Cortés, Santiago David

(57) **Abstract**

Device for coupling tubes and accessories such as plugs, extensions and spigots, which comprises two axially complementary parts (1,2), wherein one part (1) defines an adjustment nut for the device and a second part (2) defines a body for holding the end of the tube (15), said first part (1) internally presenting a threaded proximal segment (3) and a conical distal segment (5), and said second part (2) presenting an external threaded proximal segment (7) and a conical distal segment (8) that receives the end of the tube (15), and includes a succession of flaps (9) separated by longitudinal grooves (10) that can move elastically in a radial sense. The proximal segment (7) of the second part (2) has a threaded duct (13) that extends from a seat (16) that acts as a stop for the tube (15) to be coupled. The second part (2) presents a seat (11) for an O-ring (12).

## Description

### OBJECT OF THE INVENTION

The present invention relates to a device for coupling tubes and accessories such as plugs, extensions and spigots, and more specifically a device of the type commercially known as a "racord", formed by two parts which together allow, on one side, coupling the end of a tube without a threading and, on the other side, coupling accessories such as the aforementioned ones, in a simple, fast and secure manner.

### BACKGROUND OF THE INVENTION

The prior art in the field does not describe the existence of devices with a constructive simplicity and ensuing reduction in technical and economic means for manufacturing them, in addition to the simplicity and speed of use, that are comparable to the device that is the object of the present invention.

However, in this sense may be cited patent application P980105121, published as AR 013979 A1, by PLASSON LTD, which discloses a coupling for tubes that includes a housing and a divided conical ring that is compressed to firmly embrace a tube received in the housing, wherein the opposite ends of said ring are laterally displaced with respect to each other to allow it to be compressed, in order to reduce its internal diameter when its displaced ends move to superimpose on each other, thereby embracing the tubes.

One of the drawbacks of this coupling for tubes is that it includes a considerable diversity of parts that are complex to manufacture, which affects manufacturing and sale costs, and its handling and practical application can be significantly inconvenient, as well as entailing the risk of accidentally losing some of these parts.

It is also appropriate to cite patent application P030103150, published as AR 041105 A1, by PHILMAC PTY LTD. According to the published abstract, this request discloses a coupling assembly for plastic tubes that includes a nut (14) connected to a body (20) by corresponding threads, a holding ring (16) and a sealing gasket (18). Said nut has a hook-shaped projection (36) that has an inclined surface (46) adapted to be coupled to a surface (48) of the holding ring (16) and provide it with a force inside the body (20). When the nut (14) is tightened, its inclined surface (46) is connected and the holding ring (16) is forced both radially, to connect the tube, and longitudinally, to push the tube into the body (20), stopping against the gasket (18) and compressing it while the tube is pushed even farther outwards of the body (20). The nut (14) and the body (20) can have bevelled surfaces (46) that assemble as the holding ring (15) is pushed into the body (20).

Similarly as in the case of application P980105121 by PLASSON LTD, this tube coupling is different from the device object of the present invention in that it comprises a considerable diversity of parts that are complex to manufacture, while its handling and practical application can be considerably inconvenient, and also entails risk of accidental loss of some parts, which is a drawback worth noting. In addition, its manufacturing cost can also be considerably high.

### DESCRIPTION OF THE INVENTION

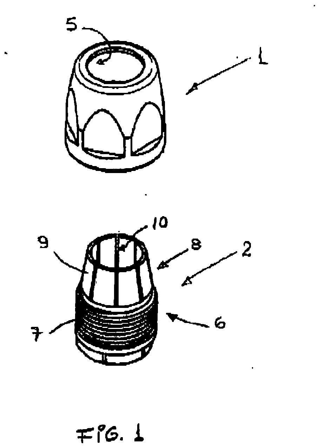

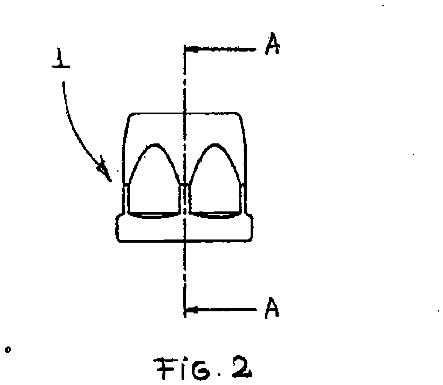

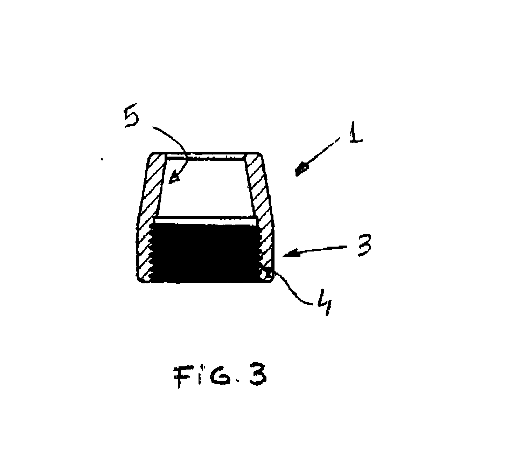

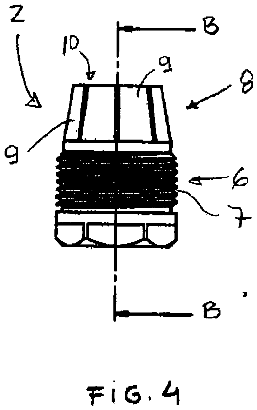

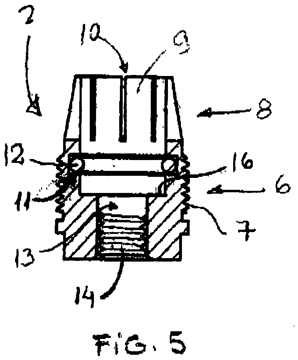

Figures 1 to 6 show that the device for coupling tubes and accessories such as plugs, extensions and spigots of the present invention comprises to axially complementary parts. A first part 1 defines an adjustment nut of the device, and a second part 2 defines a holding body for the tube end. The first part or adjustment nut 1 has a proximal segment 3 with an internal threading 4 and a conical distal part 5.

The second part or holding body 2 has a proximal segment with an external threading 7 and a conical distal segment 8 that receives the end of the tube that will be coupled to the device. Said holding body 2 includes a succession of flaps 9 that move elastically in a radial sense, separated by longitudinal grooves 10. The proximal end 6 of the body 2 has a duct 13 with a threading 14 for attaching accessories such as plugs, extensions and spigots, among others. This duct 13 extends from a seat 16 that acts as a stop for the tube that is coupled to it.

In the area of the proximal segment 6 adjacent to the distal segment 8 of the holding body 2 of the end of the tube is a seat 11 in which is housed an elastomeric O-ring, in order to ensure a watertight seal in the connection between the device and the tube.

To simplify the firm attachment of the device to the corresponding tube with a commonly-used tool, such as a spanner, the adjustment nut or part 1 has a faceted, polygonal or preferably hexagonal external surface. In addition, for the same reason, the perimeter of the proximal end of the holding body or part 2 is also polygonal, preferably hexagonal.

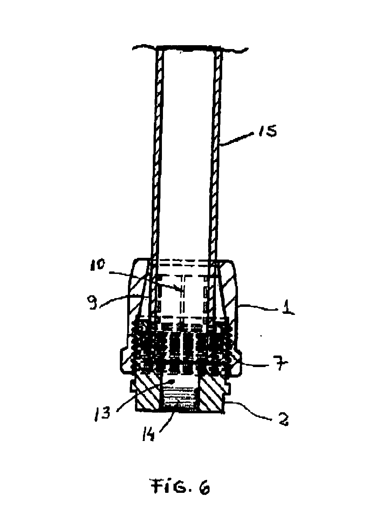

Figure 6 shows a tube 15 coupled and appropriately adjusted to the device of the present invention, as explained above.

To assemble the device, the part 2 is first screwed into part 1 without tightening. Then the tube 15 is inserted until its end rests on the seat or stop 16 of the part 2. Subsequently, the two parts are tightened against each other. As the part 2 moves into the part 1, the distal conical segment 5 of the part 1 acts on the flaps 8 of the part 2 to tighten them around the tube until the latter is firmly held in the device.

### DESCRIPTION OF THE DRAWINGS

For the sake of clarity and to aid the understanding of the object of the present utility model, several figures are accompanied that represent one of the preferred embodiments, by way of example, wherein:
Figure 1 is a perspective view that shows separately the external and internal parts that make up the device object of the invention.
Figure 2 is a side elevation view of the external part represented in figure 1.
Figure 3 is a cross-sectional view along the line A-A of the external part represented in figure 2.
Figure 4 is a side elevation view of the internal part represented in figure 1.
Figure 5 is a cross-sectional view along the line B-B of the internal part represented in figure 4.
Figure 6 is a longitudinal section view showing, as an example of application, the device of the present invention with a tube coupled to it.

### PREFERRED EMBODIMENT OF THE INVENTION

Unlike the above-cited couplings for tubes, the device object of the present invention has a very simple structure, as it is conformed by a minimum number of parts, so that its handling and application are extremely simple, quick and secure, efficiently fulfilling the function for which it is designed, with considerably lower manufacturing costs than the prior devices. This device, as described above, allows coupling tubes and accessories such as plugs, extensions and spigots. Its application does not require the end of the tube to be coupled to be previously threaded, or metallic or plastic. It allows coupling tubes with very small thickness, allows attaching it as an accessory for tubes in hard-to-reach locations, such as embedded in walls and/or extremely long and heavy tubes, and thereby provide them with a threading, and does not require the use of sealants or adhesives to achieve the necessary seal.

It is therefore an object of the present invention to provide a device for coupling tubes and accessories such as plugs, extensions and spigots, which comprises two axially complementary parts, wherein one part defines an adjustment nut for the device and a second part defines a body for holding the end of the tube, said first part internally presenting a threaded proximal segment and a conical distal segment, and said second part presenting an external threaded proximal segment and a conical distal segment that receives the end of the tube, and includes a succession of flaps separated by longitudinal grooves that can move elastically in a radial sense. The proximal segment of the second part has a threaded duct that extends from a seat that acts as a stop for the tube to be coupled. The second part presents a seat for an O-ring.

## Claims

1. Device for coupling tubes and accessories such as plugs, extensions and spigots, of the type commercially known as "racord", the device being formed by parts that together allow, on one side, coupling the end of an unthreaded tube and, on the other side, coupling accessories such as the aforementioned, **characterised in that** it comprises to axially complementary parts that define a first tubular part which receives a second tubular part, the first part internally presenting a threaded proximal segment and the second part presenting an externally threaded proximal segment and a conical distal part formed by a succession of flaps able to move elastically in a radial sense.

2. Device according to claim 1, **characterised in that** the proximal segment of said second part presents a threaded duct that extends from a seat that acts as a stop for the tube to be coupled.

3. Device according to claims 1 or 2, **characterised in that** said second part presents a seat for an O-ring.

4. Device according to any of claims 1, 2 or 3, **characterised in that** the external face of said first part partially presents a polygonal surface.

5. Device according to any of the above claims, **characterised in that** the second part presents on its proximal end a polygonal perimeter.
